(19) Europäisches Patentamt
European Patent Office
Office européen des brevets

(11) **EP 2 848 908 B1**

(12) **EUROPEAN PATENT SPECIFICATION**

(45) Date of publication and mention
of the grant of the patent:
**01.01.2020 Bulletin 2020/01**

(51) Int Cl.:
**G01L 9/00** *(2006.01)*   **G01L 27/00** *(2006.01)*

(21) Application number: **13184610.7**

(22) Date of filing: **16.09.2013**

(54) **CAPACITIVE PRESSURE SENSOR**

KAPAZITIVER DRUCKSENSOR

CAPTEUR DE PRESSION CAPACITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.03.2015 Bulletin 2015/12**

(73) Proprietor: **ams International AG**
**8640 Rapperswil-Jona (CH)**

(72) Inventors:
• **Besling, Willem**
**8640 Rapperswil (CH)**
• **Van Der Avoort, Casper**
**8640 Rapperswil (CH)**
• **Pijnenburg, Remco Henricus Wilhelmus**
**8640 Rapperswil (CH)**
• **Goossens, Martijn**
**8640 Rapperswil (CH)**
• **Oldsen, Marten**
**85646 Anzing (DE)**

(74) Representative: **Epping - Hermann - Fischer**
**Patentanwaltsgesellschaft mbH**
**Postfach 20 07 34**
**80007 München (DE)**

(56) References cited:
**EP-A1- 2 637 007**   **EP-A2- 1 128 173**
**WO-A2-2005/024367**   **FR-A1- 2 532 761**
**US-A- 5 470 797**

**Description**

Field of the invention

This invention relates to capacitive pressure sensors.

Background of the invention

Capacitive pressure sensors show a non-linear capacitance - pressure behavior. As a result, calibration methods are required for such sensors so that the sensor response is predictable over the entire range of operation. Calibration methods for capacitive sensors are well known in the art.

By way of example, some methods are based on polynomial fits on capacitance - pressure ("C-P") curves.

The more calibration data points are used, the better the accuracy. The accuracy can be further improved when higher order polynomials are employed. However, due to the non-linear C-P relation, the error becomes larger with increasing pressure or capacitance.

A solution to this problem is to take more calibration points at higher pressure i.e. the region where the non-linearity in the C-P curve is the largest. Another approach would be to use a circuit architecture that yields 1/C(P) type output. If 1/C(P) is plotted as function of P, a relatively linear relationship is found that can be fitted in the digital domain to a second order or third order polynomial function.

Another problem with higher order polynomial fits is that the error close to the outer calibration points becomes large as well. This effect is known as the Runge interpolation phenomenon. Hence, extrapolation outside the calibration range usually leads to erroneous results.

Thus, the non-linear capacitance - pressure function typically requires a large number of calibration points and non-linear curve fitting routines to get an accurate output value. Applying different pressures in an industrial test and calibration setting is time consuming and hence very costly.

During a standard calibration, several reference pressures are applied to the pressure sensitive membrane and the capacitance is measured. Correction and calibration parameters are then extracted from the measurements and stored in a memory on the chip or circuit elements are trimmed. The calibration data comprises capacitance - pressure data points taken in the appropriate pressure sensing range.

Typically more than four C-P points are needed to be able to derive a third order polynomial fit through the data points. As the C-P relation is nonlinear the more calibration points are available the more accurate the polynomial fit will be. As in any application, a tradeoff has to be made between the number of calibration points, the number of included terms of the C(P)-dependency function, the accuracy of the coefficients and the associated cost/time to measure at all those individual operating points.

Document US 5 470 797 A discloses a pressure sensor with a silicon membrane manufactured based on a silicon-on-insulator, SOI, wafer. In an embodiment, the sensor comprises a variable and a reference capacitive sensor with top plates being flexible diaphragms made of the top silicon film of the SOI wafer and stationary electrodes formed by the substrate. Cavities of the sensors are formed by partially removing an oxide layer of the SOI wafer. For the variable capacitive sensor, an etch hole is sealed with an oxide, while for the reference capacitive sensor, a vent hole is opened and covered by a layer of a gas permeable polyimide seal.

There is therefore a need for an improved sensor design which can enable a simpler calibration approach.

**Summary of the invention**

The invention is defined by the claims.

According to an aspect of the invention, there is provided a capacitive pressure sensor, comprising:

a first sensor device formed from a set of layers, comprising a closed cavity having upper and lower electrodes, wherein the cavity shape is changed in dependence on a pressure exerted on the cavity roof;

a second sensor structure formed from the same set of layers, comprising a cavity having upper and lower electrodes, wherein the cavity roof is vented to the area above the cavity roof such that the cavity is not changed by pressure applied to the roof within a pressure sensing range of the pressure sensor; and

a capacitance measurement arrangement for measuring a capacitance between the electrodes of the first sensor device and a capacitance between the electrodes of the second sensor structure.

Moreover, the capacitive pressure sensor comprises an integrated circuit which is a CMOS integrated circuit. The first sensor device and the second sensor structure are provided over the integrated circuit. The lower electrodes connect to a top metal layer of the CMOS integrated circuit by means of interconnect vias. The lower electrodes are Ti/TiN electrodes. The cavities are formed over the lower electrodes.

This structure makes use of (at least) two pressure sensing structures. One of these is the main sensing device, and the other is a reference structure. They are preferably geometrically identical, so that the only difference in their design is that one device includes at least one venting arrangement, such as an access hole, to the environment.

The open cavity structure can be used to derive important device parameters that determine the deflection behavior of the sealed cavity sensor device. Also the offset capacitance (the capacitance between the membrane when flat and the bottom electrode including any additional parasitic capacitances) and the cavity pressure can be determined.

These parameters can then be fed into a model that accurately describes the deflection behavior and the capacitance pressure function of the sealed cavity device. The model is based on physical input parameters such as membrane diameter, electrode diameter, gap height, isolation layer thickness, cavity pressure, membrane thickness, Young's modulus, and membrane stress. One of these parameters is selected as variable and used to fit the analytical non-linear C-P function to the C-P data.

The invention thus enables a calibration approach with much fewer calibration points, while having a significantly lower error than standard high order polynomial fits on C-P data. Measurement accuracy can be orders of magnitude better than a polynomial fit for the same number of calibration points.

Essentially, the invention involves using a reference membrane with an open access to ambient pressure (detectable) and an electrical measurement to derive the cavity pressure (for example from a resonance frequency difference). A first C-P point is obtained at a measured ambient pressure, but without needing pressure control. The capacitance of this open cavity reference sensor and the derived cavity pressure gives a second C-P point. The fitting algorithm can use a single variable (such as the effective membrane stress) to tune the capacitance of the model to the actual capacitances at the two pressure points.

The approach can be used to improve the overall accuracy and/or to reduce the number of calibration points without paying a huge penalty on measurement accuracy. This shortens test time and hence reduces test costs.

In particular, the need to provide a controlled pressure can be avoided, in that measurements only need to be taken at the prevailing ambient pressure.

The structure of the invention means that minimally two C-P points are required to describe the non-linear C-P curve correctly. A pressure calibration is performed only at a single pressure point. The additional C-P calibration point(s) can then be derived from appropriate electrical measurements on the pressure sensor device itself and on the reference device. A plurality of electrical measurements can for example be performed on a plurality of reference devices to generate additional calibration points. The electrical measurements for example comprise resonance frequency measurements, and capacitance-voltage measurements. These measurements carried out on the pressure sensor and the reference sensor then yield information on the cavity pressure.

The sensor can further comprise a third sensor structure formed from the same set of layers, comprising a filled cavity having upper and lower electrodes, thereby defining a fixed spacing between the electrodes, and wherein the capacitance measurement arrangement is also for measuring a capacitance between the electrodes of the third sensor structure. The capacitance of a flat reference membrane is identical to the capacitance of a sealed membrane where the cavity pressure is identical to the externally applied pressure.

This structure can also be geometrically identical to the other two, with the only difference being that the sacrificial layer used to define the cavity is not removed. The capacitance measurement for this third structure can be used to derive the gap height.

In an embodiment, a method of calibrating a capacitive pressure sensor comprises:

measuring an ambient pressure level using a calibrated pressure sensor;
measuring a capacitance of a first sealed cavity capacitive pressure sensor device and a second, open cavity reference capacitive pressure sensor structure at the ambient pressure,
using the capacitance of the first capacitive pressure sensor device at the ambient pressure as a first calibration point of a capacitance - pressure function for the first capacitive pressure sensor device;
measuring the resonance frequency of the first pressure sensor device and the second, reference pressure sensor structure and deriving a difference frequency;
determining a cavity pressure value of the first pressure sensor device from the capacitance of the second, reference capacitive pressure sensor structure at the ambient pressure and the difference frequency, and
using the determined cavity pressure and capacitance of the second, reference capacitive pressure sensor structure as a second calibration point of the capacitance - pressure function for the first capacitive pressure sensor device; and
fitting a curve through the two calibration points.

This method makes use of (at least) two calibration points to which a C-P curve can be fit. As explained above, a pressure calibration is performed only at a single pressure point. The additional C-P calibration point(s) is derived from appropriate electrical measurements. However, there is thus no need for capacitance measurement at any specific pressure levels - instead the two points can be derived from measurements at an ambient pressure level of a sensor device and a reference sensor structure. Thus, no pressure control is needed as part of the calibration.

Fitting the curve can take account of gap height information. The gap height information can be obtained by measuring the capacitance of a third sensor structure comprising a non-released membrane i.e. a structure having upper and lower electrodes in which the sacrificial oxide has not been removed, thereby defining a fixed spacing between the electrodes, and deriving the gap height from the capacitance measurement. This third structure has a fixed gap height, and given the known dielectric properties of the sacrificial layer and the area, the gap height can be derived from a capacitance measurement.

Fitting the curve can also take account of the cavity roof compliance.

In operation the capacitance is only measured of the first pressure sensor device so that the multiple measurements only need to be made for the initial calibration.

The method can further comprise providing temperature correction by measuring an ambient temperature.

## Brief description of the drawings

Examples of the invention will now be described with reference to the accompanying drawings, in which:

Figure 1 shows the capacitance - pressure ("C-P") function for one design of sensor, and for different sizes;
Figure 2 shows a cross section of a first example of capacitive pressure sensor device with a sealed membrane;
Figure 3 shows a cross section of a first example of capacitive pressure sensor structure device with a vented membrane;
Figure 4 shows a cross section of a second example of capacitive pressure sensor device with a sealed membrane;
Figure 5 shows a cross section of a second example of capacitive pressure sensor structure device with a vented membrane;
Figure 6 shows some different release hole formations;
Figure 7 shows the C-P function before and after membrane collapse;
Figure 8 shows the resonance frequency and capacitance as a function of pressure, for sealed and open reference membranes;
Figure 9 shows the relationship between resonant frequency difference and cavity pressure;
Figure 10 shows an example of the non-linear capacitance-pressure function fit to the two calibration points; and
Figure 11 shows an example of the set of sensors and sensor structures which can be used to make measurements.

## Detailed description

The invention provides a capacitive pressure sensor which combines two capacitive sensor devices, which have corresponding structures, but one has a sealed and hence closed cavity and one has a vented cavity. For the sealed cavity device, the pressure sensor has a cavity roof which deforms in dependence on the pressure difference between the internal cavity volume and the applied pressure. This cavity roof is referred to as the device "membrane" in the description below.

A calibration method involves measuring an ambient pressure level using a calibrated pressure sensor, and measuring the capacitance of the sealed and open pressure sensor devices. The capacitance of the sealed device at the ambient pressure is used as a first calibration point of a capacitance - pressure function. A cavity pressure of the first pressure sensor device is obtained by converting the capacitance of the second, reference capacitive pressure sensor structure based on measuring the resonance frequency of the two sensor devices to derive a difference frequency. This difference frequency can be mapped to a pressure level. The determined cavity pressure is used as a second calibration point of the capacitance - pressure function, and a curve is fit through the two calibration points.

The reference structure enables determination of relevant calibration parameters such as capacitance offset, dC/dP, parasitic capacitance, membrane stiffness, back side cavity pressure. This then enables an accurate capacitance pressure function to be obtained with only two calibration points and without needing to control pressure levels.

In this way, the invention can enable a reduction in calibration time and/or test costs for sensors with a non-linear output, and/or can be used to improve accuracy.

Pressure sensors with a capacitive read-out have clear advantages over pressure sensors with conventional piezoresistive read-out. The main advantages are ultra-low power consumption and much higher sensitivity. Furthermore, a significant improvement in form factor can be achieved when the pressure sensitive membrane is directly built on top of an integrated read-out circuit (a so-called "single die solution").

This approach allows reduction of parasitic capacitances and will, therefore, benefit from a better signal to noise ratio than stand-alone capacitive pressure sensor dies. Moreover, from form factor and packaging points of view it is advantageous to construct multiple redundant membranes on top of CMOS instead of using individual, physically separated pressure sensor dies. In addition, performance spread will be minimized because of excellent matching, calibration at die level, and significant reduction in environmental disturbances due to on-chip shielding of e.g. electromagnetic fields.

For all these reasons it is known to construct capacitive pressure sensors on top of the final passivation layer of a CMOS read-out circuit.

The pressure sensor technology can then make use of common back-end of line (BEOL) layers for routing and shielding plates.

Each pressure sensor device comprises a bottom electrode plate and top electrode plate separated from each other by a cavity and an isolation/etch stop layer. The most essential part of the sensor is the movable membrane that deflects under a pressure applied from the outside. A change in pressure is directly correlated to a change in capacitance between the metal electrode plates.

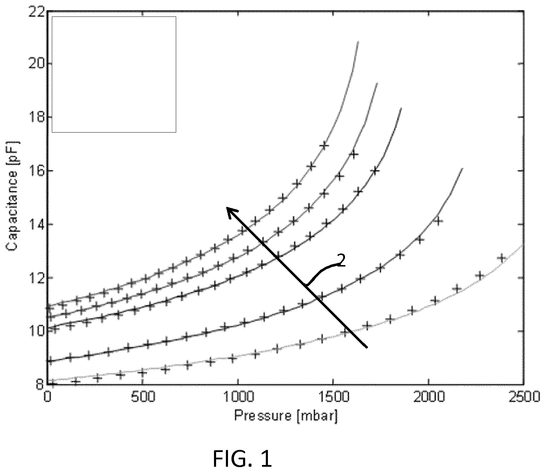

Figure 1 shows some examples of C-P curves for sensor devices which differ only in respect of different membrane diameters, and is based on an analytical model for a square membrane. The arrow 2 shows increasing membrane size.

In order to create the free-hanging membrane overlying a cavity, a sacrificial layer is deposited over the bottom electrode and etch stop layer. The sacrificial layer will be removed through tiny holes etched in the membrane using a dry etch method to avoid sticking.

After the sacrificial etch a suspended, perforated membrane is formed which is subsequently sealed with a SiN and/or SiO2 dielectric film.

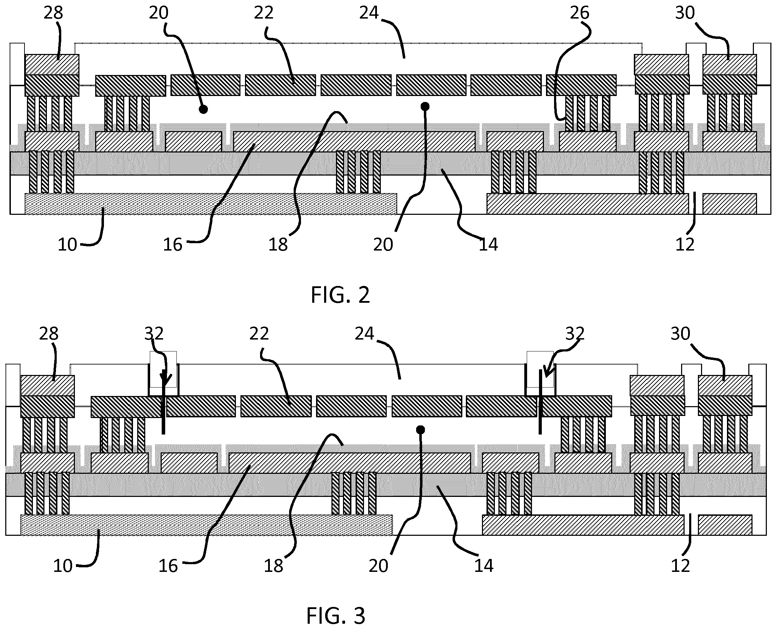

A schematic cross section of the capacitive pressure sensor is shown in Figure 2. The membrane of an identical, adjacent device is then etched open again to create a free hanging membrane that is insensitive to pressure fluctuations.

Figure 2 shows a cross section of the capacitive pressure sensor device with a sealed membrane. This is the main pressure sensing device.

The sensor layers are provided over a CMOS integrated circuit. The CMOS circuit has metal interconnect layers, and the top metal layer 10 is used for connections between the sensor electrodes, as explained below. Thus, the top metal layer 10 and the dielectric layer 12 form the top (the back-end) of the CMOS integrated circuit.

The sensor structure comprises a passivation layer 14 over which a bottom electrode 16 is formed. An etch stop and isolation layer 18 is provided over the bottom electrode layer.

A cavity 20 is formed over the bottom electrode, and the roof of the cavity includes a top metal electrode layer 22. A dielectric sealing layer 24 is provided over the top electrode.

To support the top metal electrode and sealing later (which together can be considered as the membrane, which forms the cavity roof), anchors 26 surround the cavity 20.

A bond pad 28 is shown at the top of the structure, which connects using vias to the top metallisation layer 10, and then further to the bottom electrode 16 by vias extending between the bottom metal layer and the top CMOS interconnect layer. In this way, the top CMOS metal layer is used for routing of signals to and from the capacitor sensor.

The top electrode 22 is connected by vias to top CMOS interconnect layer 10.

Typically the bottom electrode 16 is the sense electrode. On the top electrode 22 a signal is applied. For example, the potential is varied in order to separate charge on the electrode plates and to actually measure the capacitance. The top and bottom electrode are connected to a capacitance-to-digital converter which in a preferred embodiment can be a charge balancing circuit based on a third order sigma delta converter.

In the example of Figure 2, the terminals of the capacitive pressure sensor are connected directly to contact pads 28,30 for an external read-out. In Figure 2, only the bottom electrode connection to the bondpad 28 is shown.

Figure 3 shows an identical structure, but with vent holes 32 to the cavity 20, so that the membrane does not deform in response to applied gas pressure.

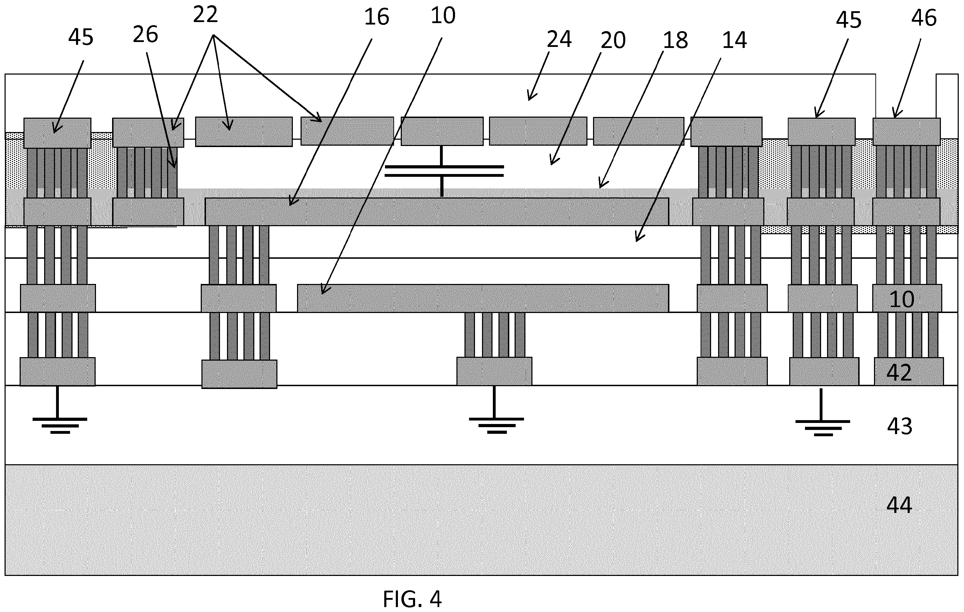

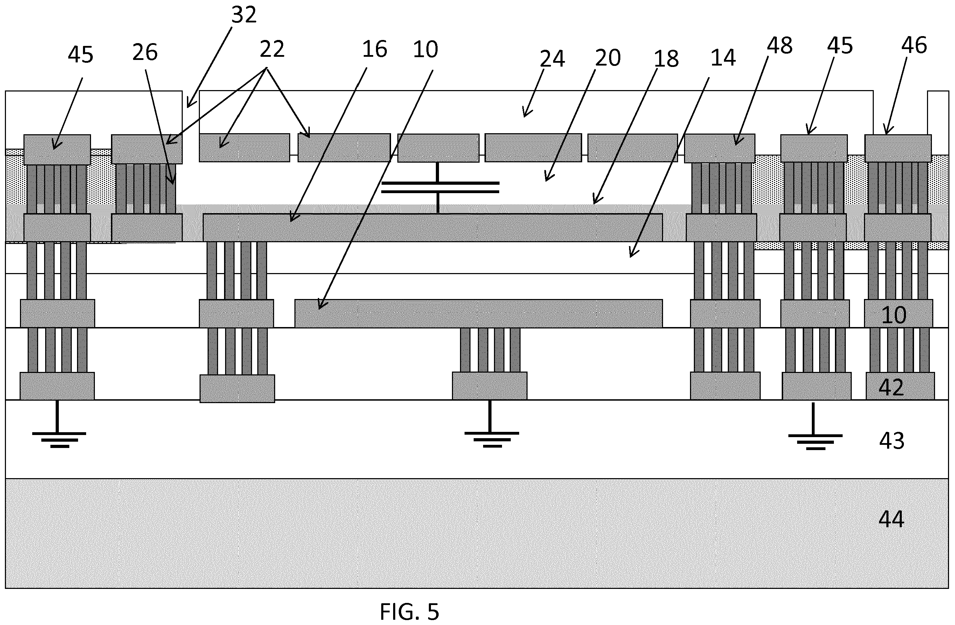

Figures 4 and 5 show a slight variation to the example of Figures 2 and 3 using the same reference numbers for the same components. In this case, the sensor is connected directly to the underlying circuitry. Connections from the top and bottom electrodes down to the metal layer 42 beneath the top metal layer 10 are shown. For example the top metal layer 10 can be M5 (the fifth metal interconnect layer), the layer 42 can be M4 and the layers M1 ,M2,M3 are represented by layer 43, over the substrate 44.

The top electrodes 45 in this case function as shield electrodes, and the electrode 46 is a bond pad. The via stack 48 provides connection of the top electrode to the underlying circuit.

A variety of approaches can be used to manufacture the sensor.

One example uses a tungsten (W) membrane 22 and a silicon oxide sacrificial layer.

The pressure sensor comprises a planar lower electrode which in this example comprises an aluminium (Al) layer 16 16 with a Si-rich SiN or a silicon carbide capping layer 18. However, a Ti/TiN or tungsten bottom electrode may be used as well. The lower electrode 16 connects to the CMOS top metal layer by means of standard interconnect vias.

The top and bottom electrodes are spaced by a sacrificial oxide which is removed later on in the processing in the regions between the capacitor electrodes.

By forming the pressure sensor on top of an integrated circuit, such as CMOS circuits, a fully integrated solution results. The top metal layer 10 of the CMOS circuit can be used to as a shielding plate for the overlying bottom electrode and also to enable the formation of interconnects.

The integration on CMOS allows eliminating bond wires, which reduces parasitic capacitances. Electrical connection to the pressure sensor bottom electrode is also accomplished via the metal interconnect layer that lie below the bottom electrode.

The top contact pads can be used for the inputs and outputs of the circuit as explained with reference to Figures 2 and 3, or else the capacitor electrodes can instead make contact only to the underlying IC for signal processing as explained with reference to Figures 4 and 5. The contact pads are then used for the IC inputs and outputs.

The top electrode 22 can be tungsten or titanium- tungsten, titanium, titanium nitride, aluminium, SiGe and/or a combination of the above mentioned materials. Deposition methods for the electrodes may comprise Physical Vapor Deposition, High densitiy plasma Sputtering, Plasma Enhanced Chemical Vapour Deposition (PECVD), Chemical Vapor Deposition (CVD), and Atomic Layer Deposition (ALD).

The dielectric sealing layer 24 is deposited after the sacrificial oxide removal, and it is used to fill partially or completely the sacrificial etch openings which are formed over the cavity area of the pressure sensor. The aim is to reduce the diameter and/or the number of venting holes in the membrane and to electrically passivate the top electrode from its surroundings.

The membrane can also be completely sealed and then opened again at selected spots to create the venting holes. The sealing layer can comprise silicon dioxide, silicon nitride, or a stacked combination of these materials. Deposition methods for silicon oxide are high density plasma oxide (HDP oxide), Plasma Enhanced Chemical Vapour Deposition (PECVD), Chemical Vapor Deposition (CVD), and Atomic Layer Deposition (ALD).

Aluminium contact pads 28, 30 provide the required connections to the device. Tungsten-filled vias extend down from the top aluminium contact pads to the bottom electrode layer, and also from the bottom electrode layer to the CMOS top metal layer as desired, as outlined above. If a different material as top electrode is chosen, e.g. SiGe, the vias and anchor points are consequently filled with SiGe.

The isolation layer 18 is provided to prevent shorts between the top and bottom electrodes and to avoid etching of the underlying passivation layer 14 by the sacrificial HF vapour etch. Si-rich SiN, SiN and SiC can be used as etch stop and passivation layer.

Vias are used not only as electrical connection paths, but also to form anchors 26. The anchors serve as an etch stop guard ring around the cavity but also are used to make contact of the top electrode to the underlying electronics.

There are numerous possible variations to the process flow. For example, a Si-rich SiN layer can be provided under the bottom electrode as etch stop layer instead of a standard SiN passivation layer. In order to prevent shorts between the top and bottom electrode an isolation or anti-shorting layer can instead be provided on top of the sacrificial oxide layer, or there may be a Si-rich SiN layer both beneath and above the sacrificial etch oxide. One of these layers can be patterned to device anti-stiction bumps.

When a Si-rich SiN layer is provided on top of the sacrificial oxide layer, it can become a support layer for the top metal electrode to avoid buckling.

When the Aluminium contact pads are etched open also the hole(s) in the reference device of Figure 3 or Figure 5 are opened. The typical dimension of the venting hole for the reference device is comparable to the hole diameter of the vHF release holes in the membrane. They are preferably aligned above each other to facilitate the etching process of the sealing layer.

The venting holes 32 shown in Figure 3 and Figure 5 can be arranged in different ways.

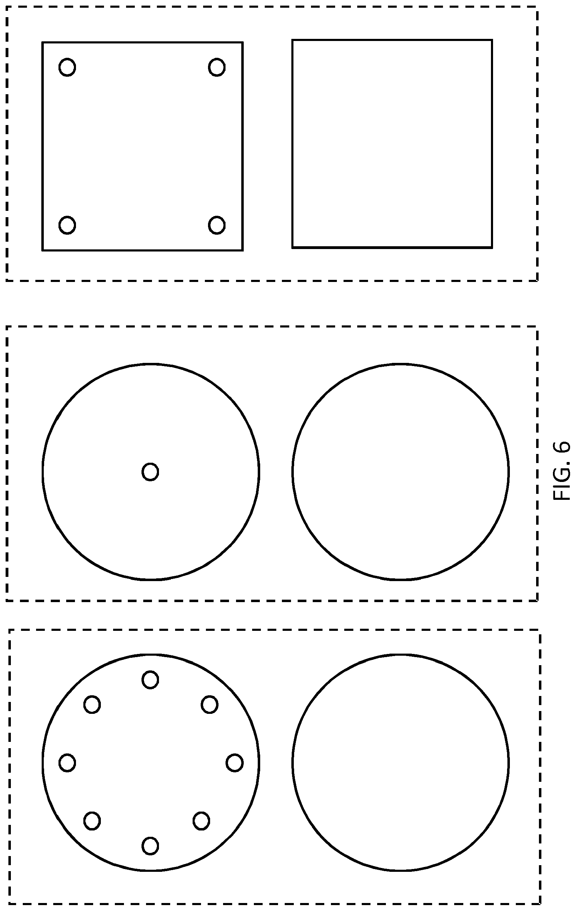

Figure 6 shows some examples of the vented and non-vented membranes. A first example has vent holes arranged near the outer periphery of a circular membrane, for example, with 8 evenly spaced openings. Instead, there may be a single central opening to a circular membrane, or corner openings to a square membrane.

Thus, the membrane can be square / rectangular, for example with openings at the corners, or indeed any other polygonal shape. Polygon structures can have straight or rounded corners.

A sensor can also be formed with plurality of membranes with different diameters and/or geometrical shapes. For each membrane design, there is one structure with the cavity vented and one with the cavity closed. By providing multiple sensor designs as part of one overall pressure sensor, it is possible to measure reliably in different pressure regimes.

A larger membrane will be pushed into collapse at a smaller pressure whereas a smaller membrane is still not touching the bottom electrode. The larger membrane has a much higher sensitivity but a smaller pressure range that can be measured whereas the smaller one has a lower sensitivity but a larger range.

A switch matrix can be used to enable a selection to be made as to which membrane needs to be measured depending on the required accuracy and pressure range.

Multiple sensors can be ordered into arrays and connected in parallel to increase the capacitance, and capacitance change for a certain applied pressure.

The operation of a capacitive pressure sensor will now be explained in more detail. A (static) pressure causes a deflection of the membrane and thus a change in the capacitance. As an example, the deflection behavior is discussed of a circular membrane w(r,P) in the flexural rigidity dominated regime as function of pressure P is given by:

$$w(r,P) = \frac{3PR^4(1-v^2)}{16Eh^3}\left[1-\left(\frac{r}{R}\right)^2\right]^2$$

where R is the radius of the membrane and r the distance from the edge to the actual deflection point, v the Poisson ratio, E the Young's modulus and h the membrane thickness.

As is apparent from the relation above, the deflection scales with $R^4$ and $1/h^3$ Small variations in membrane size and membrane thickness have a large impact on the deflection profile and hence the capacitance. For this particular reason there will be also significant spread in the pressure sensitivity even when geometrical properties such as thickness and diameter are kept within well controlled limits.

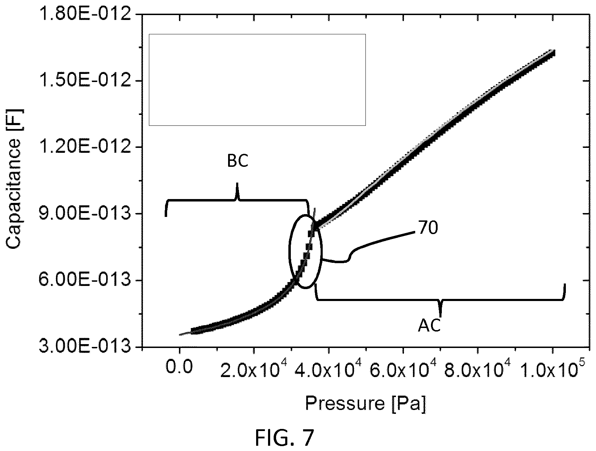

In Figure 7 a Finite Element Simulation is shown of a typical capacitance pressure curve showing the non-linear C-P dependence before collapse ("BC") and a fairly linear C-P behavior in the after collapse state ("AC"). The device should preferably not be operated in collapsed mode because of hysteresis effects during membrane roll-off.

The non-linear C-P behavior can be understood because the capacitance increases, to a first order approximation, with the inverse distance between the electrode plates (C ~ 1 / gap). The highest sensitivity is obtained just before the membrane touches the bottom of the cavity, shown as region 70.

This behavior can be advantageously used to improve the pressure sensitivity and hence the resolution in the pressure reading.

The trade-off, however, is that multiple capacitance - pressure points need to be recorded during a time consuming (i.e. costly) calibration approach.

This invention aims to reduce the number of calibration points and, at the same time improve the accuracy of the fit.

In a preferred embodiment the reference membrane will be flat and not deflected by an externally applied uniform pressure.

The capacitance of such a membrane allows determination of the offset capacitance i.e. the capacitance between the membrane and the bottom electrode including any additional parasitic capacitances.

The capacitance of the un-deflected membrane corresponds to a point on the C-P curve of the sealed membrane where the pressure difference is zero. In the case of zero cavity pressure (i.e. a vacuum sealed device) this corresponds to a point on the C-P curve of the sealed membrane at zero pressure. If there is a change in deflection shape for the reference sample e.g. as function of temperature due to a thermal expansion mismatch of the membrane with the substrate, the pressure sensitive membrane will react accordingly.

If the cavity pressure is not close to zero but has a certain value, the cavity pressure will vary depending on the deflection state.

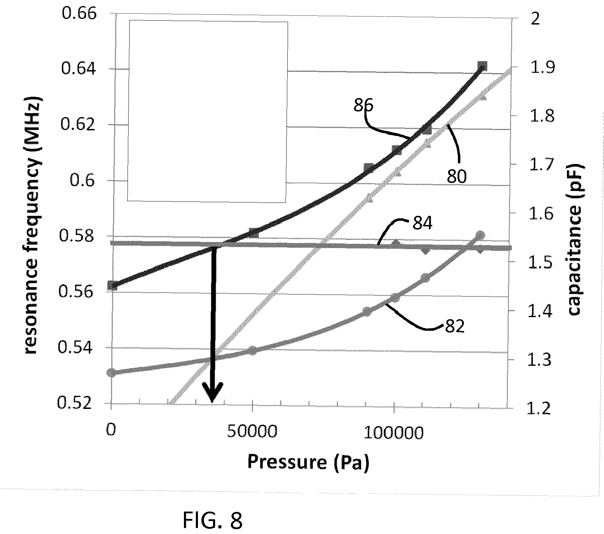

Figure 8 shows the resonance frequency and capacitance as a function of pressure, for sealed and open reference membranes (340um diameter, square). The cavity pressure is 360 mbar.

Plot 80 shows the resonant frequency as a function of pressure for the open cavity membrane and plot 82 shows the resonant frequency as a function of pressure for the sealed cavity membrane. Plot 84 shows the capacitance as a function of pressure for the open cavity membrane and plot 86 shows the capacitance as a function of pressure for the sealed cavity membrane.

The gas pressure inside the cavity will cause the membrane to bend slightly upwards in a vacuum ambient pressure, leading to a lower capacitance and also a much larger collapse pressure. The cavity volume reduces with increasing pressure thereby increasing the internal pressure.

There are multiple ways to determine the pressure inside the cavity. Impedance measurements as function of frequency, Z(f), on the sealed and reference membrane give sufficient information to determine the back side pressure.

When the resonance frequency of the reference membrane is identical to the resonance frequency of the sealed membrane the deflection state is identical (i.e. flat in the preferred embodiment). Then, not only the cavity pressure is known but also the capacitance at that particular pressure point. Resonance frequency measurements are particularly attractive as the resonance frequency is a square root function of cavity pressure. A measurement of the capacitance at two different temperatures can also be used to derive the cavity pressure (PV=nRT).

The example of equal frequencies is an example of a possible condition to explain the principle on which the cavity pressure extraction procedure is based. If the resonance frequency of the sealed and open reference devices are identical, it is known that the cavity pressure is identical to the external ambient pressure. In reality there will be a large difference between the resonance frequencies of sealed and open device at ambient pressure. The resonance frequency of the sealed device will be lower than that of the open device because the cavity pressure in the sealed device will be lower: the gas molecules i.e. air inside the cavity of the open device are increasing the spring constant of the membrane due to the air cushion effect. This makes the membrane more stiff and therefore the resonance frequency will increase. The difference in the resonance frequency is a measure of the gas pressure inside the cavity.

In a vacuum, the spring constant depends on the material parameters and geometry of the membrane, including the openings therein. At higher external pressures, gas enters the narrow gap via the openings. If the resonance frequency of the membrane is high enough, the small holes and narrow gap spacing in combination with the gas' viscosity prevent the gas from substantially leaving the cavity region in one resonance period. As a consequence the amount of gas stays about constant, such that the ideal gas law will be obeyed.

For fast expansion and compression, heat exchange can be neglected, such that the gas is adiabatically compressed and expanded. Therefore, it is approximately valid that $P*V^\gamma$=constant, where y is the adiabatic index which is approximately 7/5 for a diatomic gas (like the nitrogen and oxygen in air). If the downward membrane deflection is equal to $\Delta z$ over its whole area A (piston mode model), this corresponds to a spring with spring constant $k_{gas}$.

$$k_{gas} = -A\, dP/dz = A^*d(P^*V^\gamma/V^\gamma)/dz = -A^*P^*V^\gamma d((A\, z)^{-\gamma})/dz = \gamma P^*A/z.$$

As an example, for a 100 micron radius membrane with a gap of $z_0$=300 nm and at atmospheric pressure (P=100 kPa), $k_{gas}$=15000 N/m.

In some embodiments in which displacement is not equal at every point on the membrane, a correction factor $\alpha$ is used as follows.

$$k_{gas} = \alpha\gamma P^*A/z_0 \qquad\qquad (2)$$

The correction factor is selected based upon the mode shape of the resonance.

The resonance frequency thus depends on the external pressure, because the gas inside of the cavity acts as a spring. The total spring constant of the gas and membrane is approximately given by:

$$k_{total} = k_{mem} + k_{gas} \qquad\qquad (3)$$

Since the effective (or distributed) mass m and spring constant $k_{mem}$ of the membrane are independent of pressure and $k_{gas}$ is proportional to the pressure, the resonance frequency $f_{res}$ also depends on pressure as

$$f_{res}=((k_{mem} + \gamma PA/z_0)/ (4\pi^2 m))^{1/2}= f_0(1+\alpha\gamma PA/(k_{mem}\, z_0))^{1/2} \qquad (4)$$

$$df_{res}/dP = f_0^2\alpha\gamma A/(2f_{res}k_{mem}\, z_0), \qquad\qquad (5)$$

in which $f_0$ is the resonance frequency of the sensor in vacuum. Equation (5) shows that the pressure sensitivity of the device is maximal for a large ratio of area A to gap $z_0$ and a small spring constant $k_{mem}$ (e.g. for small membrane thickness and/or low stress).

In order to mitigate/prevent gas from leaving the cavity within one period, a high frequency $f_0$ (low m and high $k_{mem}$) and small gap $z_0$ are used, together with relatively few small holes that are well spaced from one other and from the center of the membrane.

If the membrane is resonating at a frequency f, which is high enough to prevent the gas from having time to escape from the cavity, the pressure $P_g$ of the gas in the gap is modulated at frequency f with an amplitude proportional to the membrane displacement

$$(|\Delta P|=k_{gas}|\Delta z|/A),$$

such that:

$$P_g(t) = P_0+|\Delta P| \sin (2\pi f\, t).$$

The pressure difference $P_g$-$P_0$ causes an amplitude dependent force (F = ($P_g$-$P_0$)A) on the membrane which acts as an effective spring constant $k_{gas}$.

By using an additional membrane having identical geometrical properties as the pressure sensitive membrane, it is possible to derive relevant physical parameters that can be used as input parameters for an analytical C-P model.

Instead of a single membrane with unknown deflection shape, stiffness, mass and thermal expansion properties, the second reference membrane has identical stiffness, mass and thermal expansion properties but is insensitive to pressure variations. This membrane can be ideally used to derive an extra calibration point in the C-P curve, derive parasitic offset capacitance, and correct for of temperature variations.

The reference membrane is preferably made on the same chip in close distance to the other membrane(s) so that the matching behavior is excellent. This provides an approach based on a single die connected to an ASIC, and this enables a lower cost and faster calibration procedure.

The calibration approach of the invention makes use of a calibration at one single pressure i.e. ambient pressure, by using both the reference sensor and the actual pressure sensor. The calibration procedure thus consists of the following steps:

1) The capacitance of the actual pressure sensor and the adjacent reference sensor is measured by an on-chip capacitive read out circuit. The pressure is ambient pressure and does not have to be controlled in a special chamber. It needs to be only accurately measured by another calibrated reference pressure sensor. This saves test/calibration time and costs.

2) The capacitive pressure sensor yields the first C-P calibration point.

3) The following steps are carried out to determine the second calibration point: The reference sensor gives the capacitance of the membrane in an un-deflected state. The pressure that corresponds to this capacitance value is identical to the cavity pressure, since no pressure gradient implies no deflection. This cavity pressure can be derived by determining the resonance frequency of the sealed and open reference membrane. The frequency difference is calculated. From a lookup table or from a simple function the cavity pressure can be derived.

Frequency difference data can be measured and calculated for different membrane configurations. The slope of the frequency difference function as function of pressure depends on the gap height, the gas composition, and slightly on the membrane diameter.

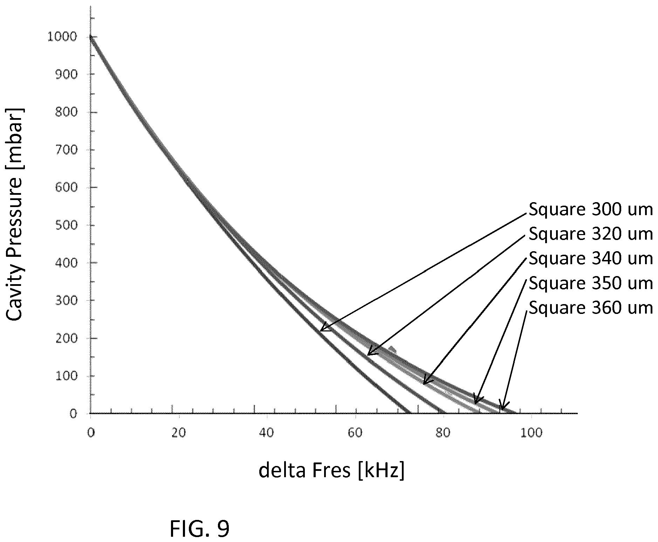

Figure 9 shows the relationship between cavity pressure and frequency difference for different sized square membranes.

This gives a second calibration point.

A function can then be provided as a best fit to these two points. The function will not be linear, and various parameters define the non-linear function.

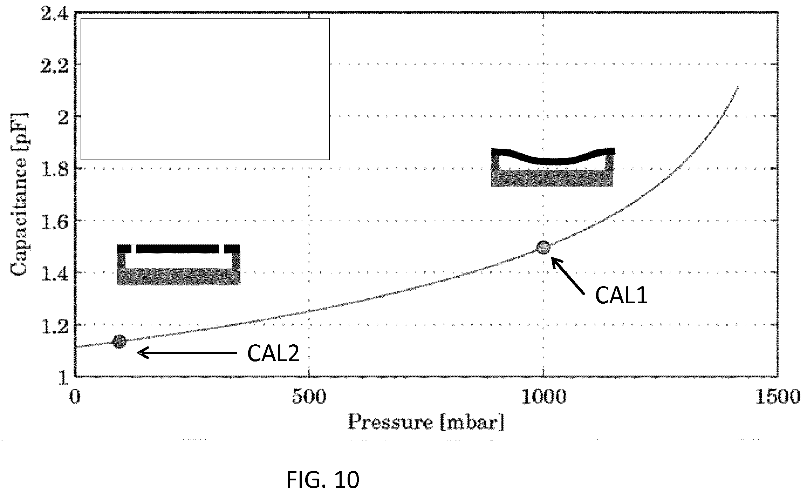

Figure 10 shows the non-linear function which has been fitted to two points; the calibrated pressure measurement of the sealed sensor CAL1 and the capacitance measurement from the open sensor CAL2.

For example, to derive the non-linear function, from a PCM structure or a third, identical device of which the sacrificial oxide has not been removed, the dielectric thickness or gap height can be derived. The gap height can be obtained based on capacitance measurement for this third structure.

The gap height is an important parameter in the C-P model that is used to draw a curve through the two C-P points.

Another parameter that determines the shape of the C-P curve is the membrane compliance. This is for example largely determined by the membrane stress, which itself is tuned in such a way that the calibration function matches the first C-P calibration point.

The curve fitting algorithm can be carried out externally but also on chip. This provides the C-P curve at greatly improved accuracy over the pressure range of interest.

All the relevant C-P points can now be calculated and put in a look-up table for later use or calculated directly from the algorithm, or more simple functions can be derived from the fitted C-P curve.

In operation, the capacitance is only measured of the sealed pressure sensor device. From the look-up table or the inverse function (P-C) the accompanying pressure can be derived.

Temperature correction can also be carried out in a similar fashion either by using the look-up tables for a different temperature or using an appropriate C-P-T function. The temperature dependency is fully determined by fixed material properties, the cavity pressure, and the membrane compliance. It is not necessary to measure the C-T behaviour in the calibration although it can be validated by increasing the temperature of the device under constant pressure and verifying that the pressure output signal is constant.

If the resonance frequencies are measured on chip, the device can perform auto calibration to correct for drift or potential outgassing in the cavity.

The calibration method with three different sensor structures involves measuring the capacitance of the sealed, open, and not released membranes. The latter structure is used to determine gap height but also a PCM structure can be used for this purpose (in line measurement).

The gap height is an important parameter in the C-P model. The open reference membrane can be used to derive the actual gap height by a simple capacitance measurement but additional accuracy can be achieved if in addition to the previously described measurements also a device is measured of which the membrane is not released. This allows to correct for additional parasitic offset capacitances that might be present.

Another advantage of the additional capacitance measurement(s) is that the sacrificial oxide thickness (i.e. gap height after membrane release) and the etch stop layer thickness can be determined.

Also a Process Control Monitor (PCM) structure can be used for this purpose. A PCM structure does not necessarily resemble the actual pressure sensor device but can be implemented to derive layer thicknesses by performing a capacitance measurement between two plates or in between comb- comb structures.

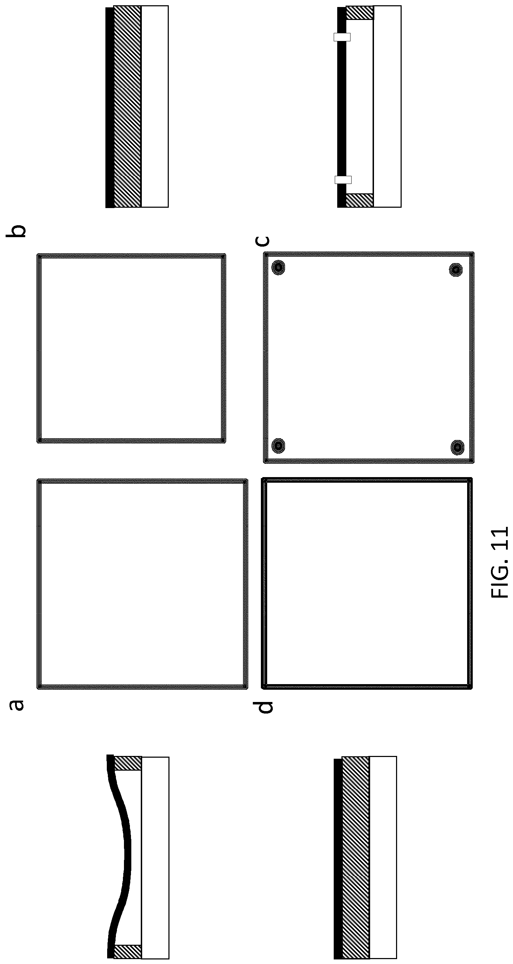

Figure 11 shows the combination of four structures, namely the released sealed sensor (a), the PCM structure (b), the non-released sensor structure (c) and the released vented sensor (d).

The PCM structure can for example be a non-released sensor structure of a different size. The capacitance scales linearly with area, so a capacitance offset can be derived from the linear function of capacitance with area, and and its crossing of the y-axis.

The resonance frequency is measured of the sealed and open membranes. The resonant frequency difference is a measure for the cavity pressure, and the gap height influences the shape and slope of the function.

An algorithm (e.g. in Matlab) then calculates the deflection function of the membrane and integrates this over the surface area of the bottom electrode in order to derive a capacitance value for a certain deflection state, ie pressure.

Most input parameters are material properties and fixed geometrical parameters such as diameter, material properties etc. The variables that could vary due to process variations are being measured in line. These variables are: gap height, parasitic capacitance to ground, cavity pressure, membrane thickness, and stress.

The variable that is difficult to measure in line is the actual stress in the membrane stack. However, this is an important parameters to determine the membrane compliance. This parameter can be varied and used to match the first C-P point.

The effective stress in the pressure sensor membrane determines the deflection behaviour of the membrane. Changing the stress in the deflection function will also change the shape of the C-P curve. It will not miss the second calibration point because this is the point around which the C-P curve will pivot. The actual capacitance value of the open reference membrane is the capacitance value of a flat membrane. This can be easily calculated from the relation of a parallel plate capacitance $C = e_0 e_r * A / d_{eff}$ plus an additional offset capacitance.

$d_{eff}$ is the effective "dielectric" distance between the plates (gap height+thickness of the etch stop layer). If the "stress" parameter is reduced the C-P curve will bend upwards and the collapse pressure is decreased. The stress parameter in the model is decreased to that extent that the capacitance at ambient pressure is matched with the actual C-P value (i.e. calibration point 1). Varying the stress for C-P calibration point 2 does not influence the position of this point because it defines a state in which the membrane is flat (the membrane is only flat if the cavity pressure is equal to the external pressure). This shows the relevance of determining cavity pressure in the first place.

After this is done the shape of the curve is fully fixed. In the algorithm routine the C-P point matching is quickly carried out. After this the stress in the membrane stack is known for this particular device. The routine can then evaluate different pressures and calculate the corresponding deflection shape and deflection magnitudes. Integrating over the area gives finally the capacitance. This capacitance prediction is better than 0.2% over the full pressure range and has zero error at ambient pressure.

In order to allow smooth calculation of pressure from a measured capacitance value there are multiple options:

1) Based on the C-P function a look-up table is calculated which is stored in memory on the device. Intermediate capacitance points can be converted to pressure by simple interpolation;
2) Fit a non-linear function through the calculated C-P data points using a polynomial, Taylor expansion, spline function, thiele interpolation, arctan function, elliptic function, or least square fit function. The corresponding pressure can be calculated using one of the above functions or combinations thereof;
3) As the deflection function is known, real time integration could be used to calculate capacitance. The pressure is then found in an iterative way. In this case only the parameters need to be stored.

The reference sensor only needs to be probed during calibration. It is preferably constructed adjacent to the actual sensor to allow good matching. If the necessary read-out electronics e.g. to bring the membrane in mechanical oscillation, are implemented on chip then auto-calibration can be carried out. The reference sensor yields information on the cavity pressure. If this is not stable over time adjustments can be made to the model parameters that influence the membrane compliance.

The invention enables a reduction of the number of pressure calibration points and a reduction of test time and cost, with improved pressure accuracy.

For example, with the capacitance and resonance frequency measurements on the two sensors, together with gap height information, the predicted C-P model can have an error of less than 0.2% over the full range.

Thermal expansion correction of membranes can be conducted to allow accurate temperature compensation through differential read-out. The arrangement can be integrated on CMOS. The temperature measurement can be conducted to the same die to allow accurate temperature compensation. On-chip calibration is possible, with recalibration to compensate for aging effects.

The integration on an IC gives increased signal to noise ratio and offers integrated EMI shielding on chip. A reduction of parasitic capacitances results from the absence of bond wires. A small form factor is possible, as a result of a single die solution with plurality of membranes.

A low cost device results from a small Si area due to integration on top of an IC, and with low extra mask count to form the sensor structures (such as 4).

The IC can combine the functions of the read-out circuit with other sensor modalities/functions.

Capacitive pressure sensors can be operated at ultra low power and show even then >10x higher pressure sensitivity than conventional piezo resistive pressure sensors.

The capacitive pressure sensor of the invention outperforms commercially available piezoresisitive and capacitive pressure sensors in power consumption and size for same resolution. The invention has application in the medical field, for example for intraocular pressure monitoring, for sleep apnea. Automotive applications include tyre pressure monitoring, seat occupancy detection, crash detection in bumpers/doors.

There are also mobile phone applications (altimeter, barometer), and applications for pressure sensing in shoes. Pressostat level sensing for washing machines, airconditioners and filter replacement.

Various other modifications will be apparent to those skilled in the art.

**Claims**

1. A capacitive pressure sensor, comprising:

   a first sensor device formed from a set of layers, comprising a closed cavity (20) having upper and lower electrodes (22, 16), wherein the cavity shape is changed in dependence on a pressure exerted on the cavity roof;
   a second sensor structure formed from the same set of layers, comprising a cavity (20) having upper and lower electrodes (22, 16), wherein the cavity roof is vented to the area above the cavity roof such that the cavity (20) is not changed by pressure applied to the cavity roof within a pressure sensing range of the pressure sensor; and
   a capacitance measurement arrangement for measuring a capacitance between the electrodes (22, 16) of the first sensor device and a capacitance between the electrodes (22, 16) of the second sensor structure,

   **characterized in**
   **that** the capacitive pressure sensor comprises an integrated circuit which is a CMOS integrated circuit,
   wherein the first sensor device and the second sensor structure are provided over the integrated circuit,
   the lower electrodes (16) connect to a top metal layer (10) of the CMOS integrated circuit by means of interconnect vias, the lower electrodes (16) are Ti/TiN electrodes, and
   the cavities (20) are formed over the lower electrodes.

2. A sensor as claimed in claim 1, wherein the first sensor device and the second sensor structure have the same geometrical layout.

3. A sensor as claimed in any preceding claim, further comprising a third sensor structure formed from the same set of layers, comprising a filled cavity having upper and lower electrodes, thereby defining a fixed spacing between the electrodes, and wherein the capacitance measurement arrangement is also for measuring a capacitance between the electrodes of the third sensor structure.

4. A sensor as claimed in claim 3, wherein the first sensor device and the third sensor structure have the same geometrical layout.

5. A sensor as claimed in any preceding claim, wherein the cavity roofs include the upper electrodes (22) which are a combination of titanium, titanium nitride and tungsten.

**Patentansprüche**

1.  Kapazitiver Drucksensor, umfassend:

    eine erste Sensorvorrichtung, die aus einem Satz von Schichten gebildet ist, einen geschlossenen Hohlraum (20) mit oberer und unterer Elektrode (22, 16) umfassend, wobei die Hohlraumform in Abhängigkeit von einem auf die Hohlraumdecke ausgeübten Druck verändert wird;
    eine zweite Sensorstruktur, die aus demselben Satz von Schichten gebildet ist, einen Hohlraum (20) mit oberer und unterer Elektrode (22, 16) umfassend, wobei die Hohlraumdecke zum Bereich über der Hohlraumdecke entlüftet ist, so dass der Hohlraum (20) innerhalb eines Druckmessbereichs des Drucksensors nicht durch einen an die Hohlraumdecke angelegten Druck verändert wird; und
    eine Kapazitätsmessanordnung zum Messen einer Kapazität zwischen den Elektroden (22, 16) der ersten Sensorvorrichtung und einer Kapazität zwischen den Elektroden (22, 16) der zweiten Sensorstruktur,

    **dadurch gekennzeichnet,**

    **dass** der kapazitive Drucksensor eine integrierte Schaltung umfasst, bei der es sich um eine integrierte CMOS-Schaltung handelt,
    wobei die erste Sensorvorrichtung und die zweite Sensorstruktur über der integrierten Schaltung angeordnet sind,
    die unteren Elektroden (16) an eine obere Metallschicht (10) der integrierten CMOS-Schaltung mittels Verbindungsdurchkontaktierungen angeschlossen sind,
    es sich bei den unteren Elektroden (16) um Ti/TiN-Elektroden handelt, und
    die Hohlräume (20) über den unteren Elektroden ausgebildet sind.

2.  Sensor nach Anspruch 1, wobei die erste Sensorvorrichtung und die zweite Sensorstruktur dieselbe geometrische Auslegung haben.

3.  Sensor nach jedem vorhergehenden Anspruch, darüber hinaus eine dritte Sensorstruktur umfassend, die aus demselben Satz von Schichten gebildet ist, einen gefüllten Hohlraum mit oberer und unterer Elektrode umfassend, wodurch ein feststehender Abstand zwischen den Elektroden definiert wird, und wobei die Kapazitätsmessanordnung auch zum Messen einer Kapazität zwischen den Elektroden der dritten Sensorstruktur bestimmt ist.

4.  Sensor nach Anspruch 3, wobei die erste Sensorvorrichtung und die dritte Sensorstruktur dieselbe geometrische Auslegung haben.

5.  Sensor nach jedem vorhergehenden Anspruch, wobei die Hohlraumdecken die oberen Elektroden (22) enthalten, bei denen es sich um eine Kombination aus Titan, Titannitrid und Wolfram handelt.

**Revendications**

1.  Capteur de pression capacitif, comprenant :

    un premier dispositif de capteur formé à partir d'un ensemble de couches, comprenant une cavité fermée (20) présentant des électrodes supérieures et inférieures (22, 16), sachant que la forme de cavité est modifiée en fonction d'une pression exercée sur le toit de cavité ;
    une deuxième structure de capteur formée à partir du même ensemble de couches, comprenant une cavité (20) présentant des électrodes supérieures et inférieures (22, 16), sachant que le toit de cavité est mis à l'évent vers la zone située au-dessus du toit de cavité de telle sorte que la cavité (20) ne soit pas modifiée par une pression appliquée au toit de cavité à l'intérieur d'une plage de détection de pression du capteur de pression ; et
    un agencement de mesure de capacitance destiné à mesurer une capacitance entre les électrodes (22, 16) du premier dispositif de capteur et une capacitance entre les électrodes (22, 16) de la deuxième structure de capteur,
    **caractérisé en ce que**
    le capteur de pression capacitif comprend un circuit intégré qui est un circuit intégré CMOS,
    sachant que le premier dispositif de capteur et la deuxième structure de capteur sont prévues au-dessus du circuit intégré,
    les électrodes inférieures (16) se connectent à une couche métallique supérieure (10) du circuit intégré CMOS moyennant des traversées d'interconnexion,
les électrodes inférieures (16) sont des électrodes de Ti/TiN, et
les cavités (20) sont formées au-dessus des électrodes inférieures.

2. Capteur tel que revendiqué dans la revendication 1, sachant que le premier dispositif de capteur et la deuxième structure de capteur ont la même configuration géométrique.

3. Capteur tel que revendiqué dans une quelconque revendication précédente, comprenant en outre une troisième structure de capteur formée à partir du même ensemble de couches, comprenant une cavité remplie présentant des électrodes supérieure et inférieure, définissant ainsi un espacement fixe entre les électrodes, et sachant que l'agencement de mesure de capacitance est aussi destiné à mesurer une capacitance entre les électrodes de la troisième structure de capteur.

4. Capteur tel que revendiqué dans la revendication 3, sachant que le premier dispositif de capteur et la troisième structure de capteur ont la même configuration géométrique.

5. Capteur tel que revendiqué dans une quelconque revendication précédente, sachant que les toits de cavité incluent les électrodes supérieures (22) qui sont une combinaison de titane, de nitrure de titane et de tungstène.

EP 2 848 908 B1

FIG. 1

FIG. 2

FIG. 3

EP 2 848 908 B1

FIG. 4

FIG. 5

EP 2 848 908 B1

FIG. 6

FIG. 7

FIG. 8

FIG. 9

FIG. 10

FIG. 11

**EP 2 848 908 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5470797 A